Europäisches Patentamt

European Patent Office

Office européen des brevets

(19)

(11) Veröffentlichungsnummer: **0 349 772**

**A2**

(12) **EUROPÄISCHE PATENTANMELDUNG**

(21) Anmeldenummer: 89110114.9

(22) Anmeldetag: 05.06.89

(51) Int. Cl.4: **C08F 10/06 , C08F 4/646**

(30) Priorität: 09.06.88 DE 3819577

(43) Veröffentlichungstag der Anmeldung:
10.01.90 Patentblatt 90/02

(84) Benannte Vertragsstaaten:
**BE DE ES FR GB IT NL**

(71) Anmelder: **HOECHST AKTIENGESELLSCHAFT**
**Postfach 80 03 20**
**D-6230 Frankfurt am Main 80(DE)**

(72) Erfinder: **Schreck, Michael, Dr.**
**Rauenthaler Weg 32**
**D-6000 Frankfurt am Main 71(DE)**
Erfinder: **Dolle, Volker, Dr.**
**Hattersheimer Strasse 15**
**D-6233 Kelkheim (Taunus)(DE)**

(54) **Verfahren zur Herstellung eines Polypropylens.**

(57) In dem erfindungsgemäßen Verfahren zur Herstellung eines Polypropylens wird ein Katalysatorsystem verwendet, welches auf dem Reaktionsprodukt eines Magnesiumhalogenids mit einem Elektronendonor und einer vierwertigen Titanverbindung, einer halogenfreien aluminiumorganischen Verbindung und zwei verschiedenen Organosiliciumverbindungen als Stereoregulator basiert. Man erhält Propylenhomo- und -copolymere mit sehr enger Molmassenverteilung und hoher Isotaktizität in hoher Ausbeute. Die Polymeren sind vor allem für das Spritzgußverfahren geeignet.

EP 0 349 772 A2

## Verfahren zur Herstellung eines Polypropylens

Die vorliegende Erfindung bezieht sich auf ein Verfahren zur Herstellung eines Polypropylens mit enger Molmassenverteilung und guten Verarbeitungseigenschaften.

Bekannt ist ein Katalysatorsystem, mit welchem Polypropylen mit guter Isotaktizität und hoher Ausbeute erhalten wird (vgl. DE-OS 32 41 999). Das Katalysatorsystem besteht aus den folgenden Komponenten (A), (B) und (C):

(A) einer festen Komponente, enthaltend Magnesium, Titan, Halogen und einem Ester, wobei die Komponente erhalten wird durch Inkontaktbringen einer Lösung von (i) einer Magnesiumverbindung mit (ii) einer flüssigen Titanverbindung in Gegenwart von (D) zumindest einem Elektronendonator und während oder nach der Bildung des festen Produkts (A) Inkontaktbringen mit (E) einem Ester

(B) einer organometallischen Verbindung eines Metalls der Gruppen I bis III des Periodensystems, und

(C) einer Organosiliciumverbindung mit einer Si-O-C-Bindung oder Si-N-C-Bindung.

Das mit diesem Katalysator erhaltene Polymer besitzt jedoch aufgrund seiner Molmassenverteilung für eine Reihe von Verarbeitungsprozessen, beispielsweise für den Spritzguß, ungünstige rheologische Eigenschaften, die durch einen sich an die Polymerisation anschließenden Aufbereitungsschritt, wie beispielsweise thermischen Abbau, korrigiert werden müssen.

Weiterhin bekannt ist ein Katalysatorsystem, welches durch Reaktion von wasserfreiem Magnesiumchlorid mit einem Ester, Ether oder einer Alkoxysilanverbindung, einem Titanhalogenid und einer Organoaluminiumverbindung erhalten wird (vgl. JP 58-65709). Die Molmassenverteilung des mittels diesem Katalysator erhaltenen Polypropylens ist eng, die Isotaktizität jedoch noch nicht ausreichend.

Ein anderer Katalysator, welcher aus Magnesium-, Titan-, Silicium- und Aluminiumverbindungen hergestellt wurde, ergibt Polyolefine mit enger Molmassenverteilung und guter Isotaktizität (vgl. JP 62-179 511).

Ferner ist ein Katalysatorsystem bekannt, welches einen Feststoff aus Magnesiumchlorid, Titantetrachlorid und einen Elektronendonor, ein Aluminiumtrialkyl als Cokatalysator und zusätzlich zwei verschiedene Stereoregulatoren enthält (vgl. EP-A 155 716). Das Katalysatorsystem besitzt eine akzeptable Polymerisationsaktivität, die Stereospezifität ist jedoch nicht zufriedenstellend.

Aufgabe war daher, ein Katalysatorsystem zu finden, welches ein Polypropylen mit enger Molmassenverteilung und hoher Isotaktizität in hoher Ausbeute erzeugt.

Es wurde gefunden, daß ein Katalysatorsystem, welches auf einem Magnesiumhalogenid, einem Elektronendonor, einer Titanverbindung, einem Aluminiumtrialkyl und zwei verschiedenen Organosiliciumverbindungen als Stereoregulatoren basiert, die Aufgabe zu lösen vermag.

Die Erfindung betrifft somit ein Verfahren zur Herstellung eines Polypropylens durch Homopolymerisation von Propylen oder Copolymerisation von Propylen mit Ethylen oder einem 1-Olefin mit 4 bis 10 C-Atomen in Suspension oder in der Gasphase, bei einer Temperatur von 40 bis 100 °C und einem Druck von 1 bis 49 bar, in Gegenwart eines Katalysators bestehend aus einer Übergangsmetallkomponente (Komponente A), die durch Reaktion eines Magnesiumhalogenids zunächst mit mindestens einem Elektronendonor und danach mit einer vierwertigen Titanverbindung der Formel $TiX_m(OR^1)_{4-m}$, worin $R^1$ ein Alkylrest mit 2 bis 10 C-Atomen, X ein Halogenatom und m eine Zahl von 0 bis 4 ist, in Gegenwart eines Esters einer aromatischen Carbonsäure gewonnen wurde, einer halogenfreien aluminiumorganischen Verbindung (Komponente B) und einer Organosiliciumverbindung als Stereoregulator (Komponente C), dadurch gekennzeichnet, daß die Polymerisation durchgeführt wird in Gegenwart eines Katalysators, welcher zwei voneinander verschiedene Organosiliciumverbindungen mit Si-O-C-Bindungen als Stereoregulator (Komponenten C und D) enthält.

Für die Herstellung der Komponente A wird ein wasserfreies Magnesiumhalogenid wie Magnesiumchlorid oder Magnesiumbromid, vorzugsweise Magnesiumchlorid, eingesetzt.

Das Reaktionsprodukt des Magnesiumhalogenids mit dem Elektronendonor wird in an sich bekannter Weise in Anwesenheit eines inerten Lösemittels hergestellt, beispielsweise durch Erhitzen des Magnesiumhalogenids in einer Lösung des Reaktionspartners, Suspendieren des Mg-Halogenids im flüssigen Reaktionspartner.

Das Molverhältnis des eingesetzten Magnesiumhalogenids zur Elektronendonorverbindung beträgt mehr als 2:1. Bevorzugt wird ein Molverhältnis von 3 bis 15:1, besonders bevorzugt wird ein Molverhältnis von 4,5 bis 8:1.

Als Elektronendonorverbindungen werden $C_1$-$C_{20}$-Monocarbonsäureester, $C_1$-$C_{20}$-aliphatische Carbonsäuren, $C_4$-$C_{20}$-Carbonsäureanhydride, $C_3$-$C_{20}$-Ketone, $C_2$-$C_{16}$-aliphatische Ether, $C_3$-$C_{20}$-aliphatische Carbonate, eine $C_3$-$C_{20}$-Alkoxygruppe enthaltende Alkohole, eine $C_3$-$C_{20}$-Aryloxygruppe enthaltende Alkohole, Organosiliciumverbindungen mit einer Si-O-C-Bindung, worin die organische Gruppe 1 bis 10 Kohlenstoffatome aufweist, und Organophosphorverbindungen mit einer P-O-C-Bindung, worin die organische Gruppe 1 bis 10 Kohlenstoffatome aufweist, verwendet.

Beispiele für geeignete Elektronendonoren sind Methylpentanol, 2-Ethylhexanol, 2-Ethylhexansäure und Phthalsäureanhydrid.

Für die Umsetzung wird ein Reaktor mit Rührer, Temperiereinrichtung und Schutzgasüberlagerung ($N_2$, Ar) verwendet. Das vorgelegte Reaktionsmedium ist zweckmäßigerweise das auch bei der Polymerisation verwendete Dispergiermittel. Als solches eignen sich aliphatische oder cycloaliphatische Kohlenwasserstoffe wie Butan, Pentan, Hexan, Heptan, Cyclohexan, Methylcyclohexan, Isooctan sowie aromatische Kohlenwasserstoffe wie Benzol, Toluol, Xylol; auch Benzin- und hydrierte Dieselölfraktionen, die sorgfältig von Sauerstoff, Schwefelverbindungen und Feuchtigkeit befreit worden sind, sind brauchbar. Das Dispergiermittel darf keine Verbindungen mit Doppelbindungen enthalten. Die Reaktion wird bei einer Temperatur von 0 bis 200°C, bevorzugt von 30 bis 150°C, durchgeführt.

Die Reaktionszeit beträgt in Abhängigkeit von der Reaktivität der Reaktanten 0,5 bis 5 Stunden, vorzugsweise 1 bis 3 Stunden. Danach wird die erhaltene Lösung abgekühlt.

Der auf diese Weise erhaltene Komplex wird sofort umgesetzt mit einer vierwertigen Verbindung des Titans der Formel $TiX_m(OR^1)_{4-m}$, worin $R^1$ ein Alkylrest mit 2 bis 10 Kohlenstoffatomen ist, X ein Halogenatom, bevorzugt Chlor ist, und m eine ganze Zahl von 0 bis 4, bevorzugt aber 2 oder 4 ist. Man kann ein Gemisch aus mehreren dieser Verbindungen einsetzen.

Bevorzugte Verbindungen sind z.B. $TiCl_4$, $TiCl_3(OEt)$, $TiCl_3(O-iPr)$, $TiCl_2(OEt)$, $TiCl_2(O-iPr)_2$, $TiCl_2(O-CH_2C_6H_5)_2$, $TiCl(O-IBu)_3$, $Ti(OEt)_4$, $Ti(O-Pr)_4$ oder $Ti(O-iPr)_4$.

Ganz besonders bevorzugt sind $TiCl_4$, $TiCl_2(OEt)_2$ und $Ti(OEt)_4$ oder ein Gemisch dieser Verbindungen.

In der vorstehend beschriebenen Reaktion wird die Verbindung des Titans in einer Menge von 0,1 bis 2 Mol, bevorzugt 0,8 bis 1,8 Mol, bezogen auf ein Grammatom Magnesium des Komplexes, eingesetzt.

Die Reaktionstemperatur beträgt 30 bis 150°C, bevorzugt 60 bis 120°C, und die Reaktionszeit beträgt 30 min bis zu mehreren Stunden, bevorzugt 1 bis 5 Stunden.

Die Umsetzung findet statt in Gegenwart eines Esters einer Polyhydroxyverbindung, insbesondere eines Esters einer $C_6$-$C_{16}$-aromatischen Polyhydroxyverbindung mit einer $C_1$-$C_{12}$-aliphatischen Carbonsäure. Bevorzugte Verbindungen dieser Art sind Diester der Phthalsäure mit einem $C_1$-$C_{10}$-aliphatischen oder aromatischen Alkohol, beispielsweise Phthalsäurediethylester oder Phthalsäurediisobutylester.

Die auf diese Weise hergestellte Katalysatorkomponente A wird abschließend bei einer Temperatur von 0 bis 100°C, bevorzugt von 10 bis 50°C, durch wiederholtes Waschen mit einem inerten Kohlenwasserstoff von löslichen Verunreinigungen, wie Metall- oder Halogenverbindungen befreit.

Als halogenfreie aluminiumorganische Verbindung (Komponente B) eignen sich vor allem verzweigte, unsubstituierte Aluminiumalkyle der Formel $AlR_3$, wobei R einen Alkylrest mit 1 bis 10 Kohlenstoffatomen bedeutet, wie z.B. Aluminiumtrimethyl, Aluminiumtriethyl, Aluminiumtriisobutyl, Aluminiumtridiisobutyl. Weiterhin geeignet sind die Reaktionsprodukte aus Aluminiumtriisobutyl bzw. Aluminiumdiisobutylhydrid und Isopren, die unter dem Namen Aluminiumisoprenyl im Handel sind. Besonders geeignet sind Aluminiumtriethyl und Aluminiumtriisobutyl.

Die Katalysatorkomponenten C und D sind Organosiliciumverbindungen der Formel $R^2_n Si(OR^3)_{4-n}$, worin $R^2$ eine $C_1$-$C_{10}$-Alkylgruppe, $C_5$-$C_{12}$-Cycloalkylgruppe, $C_6$-$C_{20}$-Arylgruppe, $C_1$-$C_{10}$-Alkenylgruppe, $C_1$-$C_{10}$-Halogenalkylgruppe oder $C_1$-$C_{10}$-Aminogruppe, $R^3$ eine $C_1$-$C_{10}$-Alkylgruppe, $C_5$-$C_{12}$-Cycloalkylgruppe, $C_6$-$C_{20}$-Arylgruppe, $C_1$-$C_{10}$-Alkenylgruppe oder $C_2$-$C_{16}$-Alkoxyalkylgruppe und n eine ganze Zahl bedeutet und die $R^2$-Gruppen oder $(4-n)$ $OR^3$-Gruppen gleich oder verschieden sein können.

Beispiele für Komponenten (C) und (D) sind Organosiliciumverbindungen wie Trimethylmethoxysilan, Trimethylethoxysilan, Dimethyldimethoxysilan, Dimethyldiethoxysilan, Diphenyldimethoxysilan, Methylphenyldimethoxysilan, Diphenyldiethoxysilan, Ethyltrimethoxysilan, Methyltrimethoxysilan, Vinyltrimethoxysilan, Phenyltrimethoxysilan, γ-Chlorpropyltrimethoxysilan, Methyltriethoxysilan, Ethyltriethoxysilan, Vinyltriethoxysilan, Butyltriethoxysilan, Phenyltriethoxysilan, γ-Aminopropyltriethoxysilan, Chlorpropyltriethoxysilan, Cyclohexylmethyldimethoxysilan, Cyclohexylmethyldiethoxysilan, Di-n-octyldimethoxysilan, Di-n-octyldiethoxysilan, i-Octyltrimethoxysilan, i-Octyltriethoxysilan, Methylphenyldiethoxysilan, Dibutyldimethoxysilan, Dibutyldiethoxysilan, Di-i-butyldimethoxysilan, Di-i-butyldiethoxysilan, Di-t-butyldimethoxysilan, Di-t-butyldiethoxysilan, t-Butyltrimethoxysilan, t-Butyltriethoxysilan, Di-p-toluyldimethoxysilan, Di-p-toluyldiethoxysilan, Dicyclohexyldimethoxysilan, Dicyclohexyldiethoxysilan, Ethyltriisopropoxysilan, Vinyltributoxysilan, Ethylsilicat, Butylsilicat, Trimethylphenoxysilan, Methyltriallyloxysilan, Vinyltris-(ß-methoxyethoxy)-silan, Vinyltriacetoxysilan, Dimethyltetraethoxydisilan und Phenyldiethoxydiethylaminosilan.

Unter diesen sind Methyltrimethoxysilan, Phenyltrimethoxysilan, Methyltriethoxysilan, Ethyltriethoxysilan, Phenylmethyldiethoxysilan, Cyclohexylmethyldimethoxysilan, Cyclohexylmethyldiethoxysilan, Vinyltriethoxysilan, Phenyltriethoxysilan, Vinyltributoxysilan, Ethylsilicat, Diphenyldimethoxysilan, Diphenyldiethoxysilan und Methylphenyldimethoxysilan bevorzugt.

Besonders bevorzugt sind Diphenyldimethoxysilan, Diphenyldiethoxysilan, Cyclohexylmethyldimethoxysilan, Cyclohexylmethyldiethoxysilan, Phenyltrimethoxysilan und Phenyltriethoxysilan.

Die Komponente D ist immer verschieden von der Komponente C.

Die Komponente A wird in Form einer Suspension in einem inerten Kohlenwasserstoff, oder aber nach Abtrennen des Suspensionsmittels trocken zur Polymerisation von Propylen eingesetzt. Möglich ist auch die Copolymerisation von Propylen mit Ethylen und/oder einem 1-Olefin mit 4 bis 10 C-Atomen und einer oder mehrerer Doppelbindungen, beispielsweise 1-Buten, Isobuten, 1-Hexen oder 1,3-Butadien.

Das erfindungsgemäße Verfahren kann in der Gasphase, im flüssigen Monomer oder in einem bei der Reaktionstemperatur unter Normaldruck flüssigen inerten Lösemittel ein- oder mehrstufig durchgeführt werden, wobei sowohl kontinuierliche als auch diskontinuierliche Reaktionsführung möglich ist.
Bevorzugt wird die Polymerisation im flüssigen Monomer.

Die Katalysatorkonzentration wird so gewählt, wie es für eine Propylenpolymerisation üblich ist. Die Konzentration der Komponente A beträgt daher 0,001 bis 1 mmol/dm³, bezogen auf Titan, vorzugsweise 0,001 bis 0,1 mmol/dm³.

Die Komponente B wird in einer Konzentration von 0,001 bis 5 mmol/dm³, vorzugsweise 0,1 bis 5 mmol/dm³, die Komponente C in einer Konzentration von 0,003 bis 2 mmol/dm³, vorzugsweise 0,03 bis 1,2 mmol/dm³ und die Komponente D in einer Konzentration von 0,003 bis 2 mmol/dm³, vorzugsweise 0,03 bis 1,2 mmol/dm³ vorgelegt. Das molare Verhältnis der Komponenten C und D kann dabei von 1:99 bis 99:1 variieren. Bevorzugt ist ein Verhältnis von 20:80 bis 80:20.
Die Durchführung der Polymerisation geschieht in der Weise, daß flüssiges Propylen, eine Suspension des festen Katalysatoranteils in einem inerten Suspensionsmittel sowie die weiteren flüssigen Katalysatorbestandteile in ein geeignetes Reaktionsgefäß eingepumpt werden. Dieses Reaktionsgefäß kann ein Autoklav, ein üblicher Reaktionskessel oder ein Rohrreaktor in Schleifenform sein, wobei wie üblich durch eingebaute Rührer oder Umwälzpumpen für eine ausreichende Durchmischung gesorgt wird.

Die Abführung der Reaktionswärme erfolgt durch Mantelkühlung, durch in die Gefäße eingebaute Innenkühlung oder auch durch Siedekühlung.

Das flüssige Propylen selbst, das sowohl als Monomer wie auch als Suspensionsmittel dient, kann wechselnde Mengen an inerten, niedrigsiedenden, gelösten Bestandteilen enthalten, wie z.B. Propan oder Stickstoff, die aber auf die bei diesem Verfahren entstehenden Produkte keinen Einfluß haben.

Es wird eine Reaktionstemperatur von 40 bis 100°C, bevorzugt eine solche von 50 bis 75°C eingehalten. Der Druck beträgt 1 bis 49, vorzugsweise 20 bis 35 bar.

Die Einstellung der gewünschten Molmasse des Polymeren erfolgt durch Zugabe von Wasserstoff zum Ansatz. Die zugegebene Menge wird derart eingestellt, daß das entstehende Produkt einen Schmelzindex MFI 230/5 von 0,05 bis 5000 g/10 min aufweist.

Nach Durchführung der Polymerisation wird das entstandene Polymere vom Suspensionsmittel und den sonstigen löslichen Reaktionsprodukten abgetrennt. Dies kann durch einen Filtrations-, Dekantations- oder Zentrifugierschritt in dazu geeigneten, druckfesten Aggregaten geschehen, z.B. in Druckfiltern, Sedimentationstürmen, Zentrifugen oder Dekantern. Um die Entfernung der löslichen Reaktionsprodukte zu vervollständigen, kann der Abtrennung eine Wäsche vorangestellt werden, in der die Suspension beispielsweise einer Gegenstromwäsche mit frischem flüssigen Propylen unterzogen wird. Wäsche und Abtrennung können auch in einem einzigen Aggregat durchgeführt werden, welches beide Aufgaben erfüllt, wie z.B. ein Wasch- und Sedimentationsturm nach dem Gegenstromprinzip. Am unteren Ende des Turms wird dann eine stark eingedickte Suspension des Polymerpulvers in weitgehend reinem Suspensionsmittel abgezogen.

Infolge der sehr hohen Aktivität des erfindungsgemäß eingesetzten Katalysators ist es im allgemeinen nicht notwendig, eine Entfernung der Katalysatorreste vorzusehen. Falls jedoch ein außergewöhnlich niedriger Gehalt an Katalysatorresten gewünscht werden sollte, so kann zwischen der zweiten Polymerisationsstufe und der Abtrennung noch ein Gefäß geschaltet werden, in welchem bei einer Temperatur von 50 bis 80°C, vorzugsweise 60 bis 70°C durch Zusetzen von wasserstoffaciden Verbindungen, die die aluminium-organischen Verbindungen zersetzen und gleichzeitig komplexbildend auf das im Polymerpulver enthaltene Magnesiumhalogenid wirken, eine verbesserte Abtrennung der Katalysatorreste bewirkt werden. Als derartige Verbindungen eignen sich beispielsweise höhere aliphatische Carbonsäuren, wie die 2-Ethylhexansäure.

Das nach dem Abtrennen der flüssigen Bestandteile gewonnene, propylenfeuchte Polymerpulver wird nunmehr vollständig getrocknet.

Das erfindungsgemäße Verfahren ermöglicht somit die Herstellung von Propylenhomo- und -copolymeren mit hoher Katalysatorausbeute und hoher Isotaktizität, wobei durch geeignete Wahl der Katalysatorkomponenten C und D sowie deren Konzentrationsverhältnis die Molmassenverteilung des Polymeren kontrolliert werden kann.

Die Bestimmung der Eigenschaften der gemäß den nachfolgenden Beispielen hergestellten Polymeren wurde im einzelnen nach folgenden Methoden durchgeführt:

Der Schmelzindex MFI 230/5 wurde nach DIN 53 735 gemessen und in g/10 min angegeben.

Die Bestimmung der Molmassenverteilung $M_w/M_n$ erfolgte durch Gelpermeationschromatographie bei 150 °C mit 1,2-Dichlorbenzol als Lösemittel.

## Beispiel

Herstellung einer festen Titan-Katalysatorkomponente

9,52 g (100 mmol) wasserfreies Magnesiumchlorid, 50 cm³ Decan und 46,8 cm³ (300 mmol) 2-Ethylhexylalkohol wurden bei 130 °C 2 h zur Reaktion gebracht, wobei das Magnesiumchlorid in Lösung ging. Zu der Lösung gab man 2,22 g (15,0 mmol) Phthalsäureanhydrid. Die Mischung wurde 1 h bei 130 °C weiter gerührt, bis sich das Phthalsäureanhydrid gelöst hatte. Die erhaltene Lösung wurde auf Raumtemperatur abgekühlt und im Verlauf 1 h zu 400 cm³ (3,6 mol) bei -20 °C gehaltenem Titantetrachlorid tropfenweise zugesetzt, worauf die Mischung innerhalb von 4 h auf 110 °C erhitzt wurde. Als die Temperatur von 110 °C erreicht war, wurden 5,36 cm³ (25,0 mmol) Diisobutyl-phthalat zugegeben. Die Mischung wurde weitere 2 h bei dieser Temperatur unter Rühren gehalten. Danach wurde der Ansatz heiß filtriert und der feste Anteil erneut in 400 cm³ Titantetrachlorid suspendiert und 2 h bei 110 °C umgesetzt. Danach wurde der Feststoff durch Heißfiltrieren gesammelt und mit 100 °C heißem Decan und Hexan gewaschen, bis in den Waschlösemitteln keine freie Titanverbindung mehr nachgewiesen werden konnte.

Die so erhaltene feste Katalysatorkomponente A wurde in Form einer Suspension in Hexan aufbewahrt. Ein Teil der Suspension wurde getrocknet, um die Zusammensetzung des Katalysators zu untersuchen. Die Analyse ergab 2,5 Gew.-% Titan, 56,4 Gew.-% Chlor, 17,5 Gew.-% Magnesium und 21,0 Gew.-% Diisobutylphthalat.

## Polymerisation

In einem Kessel mit 70 dm³ Inhalt und einem Impeller-Rührer wurden 15 Ndm³ Wasserstoff und 40 dm³ flüssiges Propylen vorgelegt und nacheinander 200 mmol Triethylaluminium, 20 mmol Phenyltriethoxysilan, 20 mmol Cyclohexylmethyldimethoxysilan und 2,83 cm³ der vorstehenden Kontaktsuspension ($\hat{=}$ 0,04 mmol Ti) eindosiert. Nun wurde der Kesselinhalt auf 70 °C aufgeheizt und 60 min bei dieser Temperatur gehalten. Nach dem Abkühlen und Abdampfen von überschüssigem Monomeren wurden 2,42 kg Polypropylen erhalten. Das Polymere besaß einen MFI 230/5 von 19,5 g/10 min, einen in Xylol löslichen Anteil von 1,8 Gew.-% und einen $M_w/M_n$-Wert von 4,7.

## Vergleichsbeispiel A

Das Beispiel wurde wiederholt, jedoch wurden 37 Ndm³ H₂ vorgelegt und die beiden Silane durch 40 mmol Phenyltriethoxysilan ersetzt. Man erhielt 1,28 kg Polymer mit einem MFI 230/5 von 13,5 g/10 min, einem löslichen Anteil von 2,7 Gew.-% und einem $M_w/M_n$-Wert von 7,2.

## Vergleichsbeispiel B

Vergleichsbeispiel A wurde wiederholt, wobei das verwendete Silan durch 40 mmol Cyclohexylmethyldimethoxysilan ersetzt wurde. Man erhielt 1,66 kg Polymer mit einem MFI 230/5 von 17,4 g/10 min, einem löslichen Anteil von 2,4 Gew.-% und einem $M_w/M_n$-Wert von 7,3.

## Ansprüche

1. Verfahren zur Herstellung eines Polypropylens durch Homopolymerisation von Propylen oder Copolymerisation von Propylen mit Ethylen oder einem 1-Olefin mit 4 bis 10 C-Atomen in Suspension oder in der Gasphase, bei einer Temperatur von 40 bis 100 °C und einem Druck von 1 bis 49 bar, in Gegenwart eines Katalysators bestehend aus einer Übergangsmetallkomponente (Komponente A), die durch Reaktion eines Magnesiumhalogenids zunächst mit mindestens einem Elektronendonor und danach mit einer vierwertigen Titanverbindung der Formel $TiX_m(OR^1)_{4-m}$, worin $R^1$ ein Alkylrest mit 2 bis 10 C-Atomen, X ein Halogenatom und m eine Zahl von 0 bis 4 ist, in Gegenwart eines Esters einer aromatischen Carbonsäure gewonnen wurde, einer halogenfreien aluminiumorganischen Verbindung (Komponente B) und einer Organosiliciumverbindung als Stereoregulator (Komponente C), dadurch gekennzeichnet, daß die Polymerisation durchgeführt wird in Gegenwart eines Katalysators, welcher zwei voneinander verschiedene Organosiliciumverbindungen mit Si-O-C-Bindungen als Stereoregulator (Komponenten C und D) enthält.

2. Verfahren nach Anspruch 1, dadurch gekennzeichnet, daß als Komponente C Cyclohexylmethyldimethoxysilan verwendet wird und als Komponente D Phenyltriethoxysilan eingesetzt wird.